# EUROPEAN PATENT SPECIFICATION

(11) **EP 3 419 277 B1**
(45) Date of publication and mention of the grant of the patent: **26.08.2020**
(21) Application number: 17870166.0
(22) Date of filing: 18.05.2017
(51) Int. Cl.: H04N 5/225, G02B 17/08, G02B 7/182, G02B 5/10, G02B 26/08

(54) **CAMERA MODULE AND TERMINAL DEVICE**
KAMERAMODUL UND ENDGERÄTEVORRICHTUNG
MODULE D'APPAREIL PHOTO ET DISPOSITIF TERMINAL

(30) Priority: 09.11.2016 CN 201610986372
(43) Date of publication of application: 26.12.2018
(73) Proprietor: Huawei Technologies Co., Ltd., Longgang District Shenzhen, Guangdong 518129 (CN)
(72) Inventor: XIE, Zhenlin, Shenzhen Guangdong 518129 (CN); QIN, Zhenkai, Shenzhen Guangdong 518129 (CN); RAN, Kun, Shenzhen Guangdong 518129 (CN)
(74) Representative: Epping - Hermann - Fischer
(86) International application number: PCT/CN2017/084885
(87) International publication number: WO 2018/086331

(56) References cited:
- WO-A1-2016/081567
- CN-A- 101 652 696
- CN-A- 103 246 134
- CN-A- 106 550 181
- CN-U- 203 136 024
- DE-B3-102014 213 371
- JP-A- 2001 257 914
- JP-A- 2014 036 298
- US-A1- 2014 055 624
- US-A1- 2016 241 764
- US-B1- 6 963 375

## Description

### TECHNICAL FIELD

This application relates to the field of electronic technologies, and in particular, to a camera module and a terminal device.

### BACKGROUND

A dual-channel camera module is a camera module capable of photographing two side images. A first side image may be obtained by photographing a target object on a first side by using the dual-channel camera module, and a second side image may further be obtained by photographing a target object on a second side by using the dual-channel camera module.

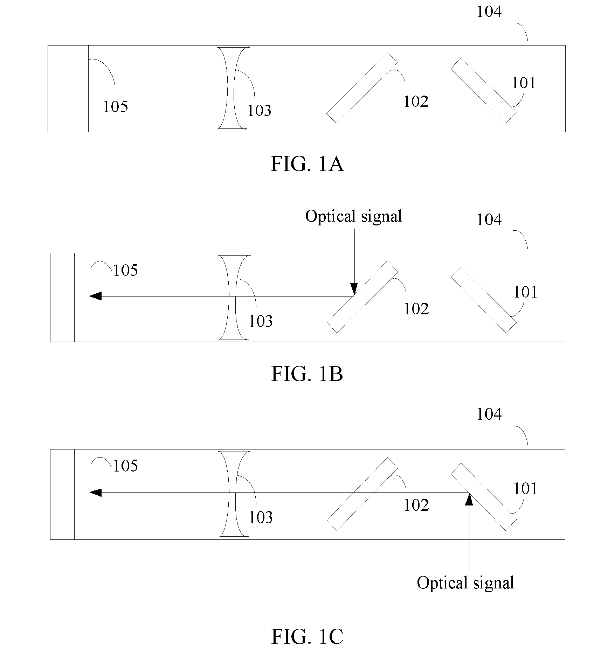

A structure of the dual-channel camera module is usually shown in FIG. 1A. The dual-channel camera module includes a first reflector 101, a second reflector 102, a lens group 103, a housing 104, and an image sensor 105. An angle between the first reflector 101 and an optical axis of the lens group 103 and an angle between the second reflector 102 and the optical axis of the lens group 103 are 45°, and an angle between the first reflector 101 and the second reflector 102 is 90°. Moreover, reflective surfaces of the first reflector 101 and the second reflector 102 both face toward the lens group 103. When the target object on the first side is photographed, as shown in FIG. 1B, the second reflector 102 is a reflector when the second reflector 102 is not powered on. The second reflector 102 reflects an optical signal from a first side of the dual-channel camera module. The reflected optical signal is transmitted to the image sensor 105 through the lens group 103. The first side image is generated by using the image sensor 105. When the target object on the second side is photographed, as shown in FIG. 1C, the second reflector 102 is powered on and becomes a lens. The first reflector 101 reflects an optical signal from a second side of the dual-channel camera module. The reflected optical signal is transmitted to the image sensor 105 through the second reflector 102 and the lens group 103. The second side image is generated by using the image sensor 105.

In a process of implementing this application, it is found that the prior art has at least the following problems: The dual-channel camera module includes two reflectors, and the two reflectors occupy relatively large space. Consequently, a size of the dual-channel camera module is relatively large, and the dual-channel camera module occupies relatively large space.

US 2016/0241764 A1 relates to an imaging structure for a portable electronic device, comprising: a housing with an opening for obtaining external light; a reflective module coupled with the housing, wherein the reflective module includes a reflective surface for reflecting the external light; and a photo-sensing module coupled with the reflective module, wherein the photo-sensing module is configured to generate an image based on the external light reflected from the reflective module toward the photo-sensing module.

DE 10 2014 213 371 B3 relates to a device for detecting an object area comprising a flat housing having a first main side, a second main side, an edge side and a multi-aperture device with a plurality of laterally juxtaposed optical channels facing the edge side, each optical channel being adapted to detect a respective sub-area of the object area through the edge side or along an optical axis of the respective optical channel which is deflected between a lateral course within the housing and a non-lateral course outside the housing, the sub-areas of the optical channels covering the object area.

WO 2016/081567 A1 relates to a camera module comprising: a first entrance pupil for transmission of light from a photographic subject; a mirror segment having a longitudinal axis of rotation, said mirror segment being movable about said longitudinal axis thereby reflecting said light; a plurality of truncated lenses aligned to transmit and focus said light reflected from said mirror segment; and an image sensor aligned to receive said light transmitted and focused by said plurality of truncated lenses for subsequent digital manipulation thereof.

US 2014/055624 A1 relates to an apparatus comprising: a computing device including a first external surface and a second external surface; a first aperture disposed on the first external surface, and a second aperture disposed on the second external surface; and a camera assembly positioned internally to the computing device and including a mirror apparatus that is configurable to alternate between reflecting light received via the first aperture, and reflecting light received via the second aperture, to enable images to be captured from a perspective of the first external surface and a perspective of the second external surface using a single image sensor.

In JP 2001 257914 A, two reflection planes having different curvatures are provided on the optical axis of an image pickup element. These planes match rotation center axes with an optical axis and are constituted so as to vertically invert convex surfaces. After an image is picked up on one reflection plane, the image is inverted by rotating an inverting means and picked up on the other reflection plane.

US 6 963 375 B1 relates to an apparatus for varying a field of view of a camera having a panning mirror rotationally coupled to an objective of the camera for bending an optical input path to align with an optical axis of the objective, and for panning the optical input path about the optical axis, and the improvement comprising: a tilt element rotationally coupled to the objective of the camera for concentric rotation aligned with the optical input path of the panning mirror about the optical axis and the tilt element having at least a first optically reflective planar surface and a second optically reflective convex surface displaced from one another arcuately about an axis of rotation of the tilt element; and a driving device coupled to the tilt element for driving arcuate rotation of the tilt element about the axis of rotation of the tilt element to effect either a selection of a reflective surface by rotating a corresponding one of at least the first optically reflective planar surface and second optically reflective convex surface into the optical input path of the panning mirror, or a tilting of the selected field of view by tilting about the axis of rotation of the tilt element of a selected one of the at least first and second optically reflective surfaces.

### SUMMARY

The present invention is defined by the appended claims. To resolve the problems in the prior art, embodiments of this application provide a camera module and a terminal device. The technical solutions are as follows:
According to a first aspect, a camera module is provided. The camera module includes a rotatable reflector, a lens group, a housing, and an image sensor;
the housing includes a first surface and a second surface, where the first surface is opposite to the second surface;
a first mirror surface of the rotatable reflector is a reflective surface, the rotatable reflector is divided into a first reflective area and a second reflective area by a plane in which an optical axis of the lens group lies, and a part of the first mirror surface located in the first reflective area is a first sub mirror surface, wherein the rotatable reflector further comprises a second mirror surface opposite to the first mirror surface, and the second mirror surface is a reflective surface; and;
when the rotatable reflector is located at a first position, the first mirror surface reflects a first optical signal entering from the first surface, and the reflected first optical signal is transmitted along a straight line along which the optical axis lies, so that a corresponding image is generated based on the reflected first optical signal, where when the rotatable reflector is located at the first position, the first reflective area is closer to the first surface than the second reflective area, an angle between the first sub mirror surface and a transmission direction of the reflected first optical signal on the straight line along which the optical axis lies is 135°, and a transmission direction of the first optical signal is perpendicular to the first surface; and
when the rotatable reflector is located at a second position, the second mirror surface reflects a second optical signal entering from the second surface, and the reflected second optical signal is transmitted along the straight line along which the optical axis lies, so that a corresponding image is generated based on the reflected second optical signal, where when the rotatable reflector is located at the second position, the second reflective area is closer to the first surface than the second reflective area, an angle between the first sub mirror surface and a transmission direction of the reflected second optical signal on the straight line along which the optical axis lies is 135°, and a transmission direction of the second optical signal is perpendicular to the second surface, wherein the rotatable reflector is sequentially rotatable to a plurality of three or more designated positions, the image sensor is configured to generate a plurality of images corresponding to the plurality of designated positions and to merge the plurality of images to form a wide-angle image; and
   the first mirror surface is a concave surface, and the second mirror surface is a convex surface; or
   the first mirror surface is a convex surface, and the second mirror surface is a concave surface.

With reference to the first aspect in a first possible implementation of the first aspect, the camera module further includes a motor, and the motor is configured to drive the rotatable reflector to rotate.

With reference to the first possible implementation of the first aspect, in a second possible implementation of the first aspect, the motor includes a drive circuit and a motor shaft, the rotatable reflector is disposed on the motor shaft, and the drive circuit is configured to drive the motor shaft to rotate, to drive the rotatable reflector to rotate.

With reference to any one of the foregoing possible implementations, in an unclaimed exemplary third possible implementation of the first aspect useful for understanding the invention, the camera module further includes a micro-electro-mechanical system (Micro-Electro-Mechanical System, MEMS) micro-mirror reflector;
when the rotatable reflector is located at the first position, the reflected first optical signal is transmitted to the MEMS micro-mirror reflector, the MEMS micro-mirror reflector reflects the reflected first optical signal, and the re-reflected first optical signal is transmitted to the image sensor, and the image sensor generates a corresponding image based on the re-reflected first optical signal; and
when the rotatable reflector is located at the second position, the reflected second optical signal is transmitted to the MEMS micro-mirror reflector, the MEMS micro-mirror reflector reflects the reflected second optical signal, and the re-reflected second optical signal is transmitted to the image sensor, and the image sensor generates a corresponding image based on the re-reflected second optical signal.

With reference to any one of the foregoing possible implementations, in a fourth possible implementation of the first aspect, the camera module further includes a motor group; and
the lens group includes N lenses sequentially arranged along the straight line along which the optical axis lies, the motor group includes N motors, the N motors correspond one-to-one to the N lenses, and each motor is configured to drive the corresponding lens to move along the straight line along which the optical axis lies, to adjust a focal length of the lens group, where N is an integer greater than or equal to 1.

With reference to any one of the foregoing possible implementations, in a fifth possible implementation of the first aspect, a plane in which the image sensor is located is parallel to the straight line along which the optical axis lies.

With reference to any one of the foregoing possible implementations, in an sixth possible implementation of the first aspect, the camera module further includes a circuit board, and the rotatable reflector, the lens group, and the image sensor are all located on a same surface of the circuit board.

With reference to the sixth possible implementation of the first aspect, in a seventh possible implementation of the first aspect, the camera module further includes a distance sensor, and the distance sensor is disposed on the motor group; and
the distance sensor is configured to: detect a distance between a target object and the distance sensor, and control movement of at least one motor of the motor group based on the distance, to adjust the focal length of the lens group, so that the adjusted focal length matches the distance.

With reference to the third possible implementation of the first aspect, in an eighth possible implementation of the first aspect, the motor is a closed-loop control motor.

With reference to the first aspect, in the eighth possible implementation of the first aspect, a first optical lens is disposed on the first surface, a second optical lens is disposed on the second surface, the first optical signal is transmitted to the rotatable reflector through the first optical lens, and the second optical signal is transmitted to the rotatable reflector through the second optical lens.

With reference to any one of the foregoing possible implementations, in a ninth possible implementation,
when the rotatable reflector is located at the first position, after the reflected firstoptical signal is transmitted along the straight line along which the optical axis lies, the reflected first optical signal is transmitted to the lens group and is zoomed by the lens group, and the zoomed first optical signal is transmitted to the image sensor, so that the image sensor generates a corresponding image based on the zoomed first optical signal; and
when the rotatable reflector is located at the first position, after the reflected second optical signal is transmitted along the straight line along which the optical axis lies, the reflected second optical signal is transmitted to the lens group and is zoomed by the lens group, and the zoomed second optical signal is transmitted to the image sensor, so that the image sensor generates a corresponding image based on the zoomed second optical signal.

According to a second aspect, a terminal device is provided. The terminal device includes the camera module according to the first aspect and a memory, where
the camera module is configured to photograph an image; and
the memory is configured to store the image.

The technical solutions provided in the embodiments of this application have the following beneficial effects:
The camera module provided in the embodiments of this application includes the rotatable reflector, the lens group, the housing, and the image sensor. When the rotatable reflector is located at the first position, the first optical signal entering from the first surface is reflected, and
the reflected first optical signal is transmitted along the straight line along which the optical axis lies, so that the corresponding image is generated based on the reflected first optical signal.

However, when the rotatable reflector is located at the second position, the second optical signal entering from the second surface is reflected, and the reflected second optical signal is transmitted along the straight line along which the optical axis lies, so that the corresponding image is generated based on the reflected second optical signal. Both a target object on a first side and a target object on a second side may be photographed by using the rotatable reflector, so that a dual-channel photographing function is implemented. Moreover, because only one reflector is disposed in the camera module, a quantity of reflectors is reduced, thereby reducing occupied space, a size of the camera module, and space occupied by the camera module.

Further, both the first mirror surface and the second mirror surface of the rotatable reflector may be reflective surfaces. When the rotatable reflector is located at the first position, the first mirror surface reflects an optical signal. However, when the rotatable reflector is located at the second position, the first mirror surface may reflect an optical signal, and the second mirror surface may also reflect the optical signal. To be specific, the rotatable reflector may rotate both clockwise and anticlockwise from the first position to the second position, improving flexibility. Moreover, both the first mirror surface and the second mirror surface may be any one of a plane, a convex surface, or a concave surface.

Further, the camera module drives the rotatable reflector to rotate by using the motor, to control a position of the rotatable reflector. Specifically, the motor includes the drive circuit and the motor shaft. The rotatable reflector may be driven to rotate by driving the motor shaft by using the drive circuit, implementing precise control over the rotatable reflector. Preferably, the drive circuit may be a closed-loop drive circuit, so that a probability that a rotation angle of the motor deviates may be reduced. The motor may further have a lock function, to ensure that the position of the rotatable reflector is unchanged, thereby ensuring that a direction of the optical signal reflected by the rotatable reflector is maintained stable.

Further, the MEMS micro-mirror reflector is disposed in the camera module, to ensure that a plane in which the image sensor is located is parallel to the straight line along which the optical axis of the lens group lies while a light sensitive chip of the image sensor can receive an optical signal, thereby reducing a thickness of the camera module, and reducing the size of the camera module.

Further, each motor in the motor group in the camera module is configured to drive the corresponding lens to move along the straight line along which the optical axis lies, to adjust the focal length of the lens group, thereby photographing both a distant target object and a near target object.

Further, the camera module is provided with the distance sensor. The distance sensor can rapidly detect the distance between the target object and the rotatable reflector, and control movement of the motor group by using the distance as a benchmark, to adjust the focal length of the lens group, so that the adjusted focal length matches the distance, thereby implementing precise focusing and increasing a focusing speed.

Further, the rotatable reflector, the lens group, and the image sensor are located on the same surface of the circuit board, so that the rotatable reflector, the lens group, and the image sensor may be electrically connected to the circuit board, thereby facilitating design and reducing process difficulty.

Further, under control of the motor, the rotatable reflector may be sequentially rotated to the plurality of designated positions, to generate the plurality of images corresponding to the plurality of designated positions, so that the wide-angle image is composited, thereby implementing a wide-angle photographing function.

### BRIEF DESCRIPTION OF DRAWINGS

FIG. 1A is a schematic structural diagram of a camera module in the prior art;
FIG. 1B is a schematic diagram of photographing a first-side target object in the prior art;
FIG. 1C is a schematic diagram of photographing a second-side target object in the prior art;
FIG. 2A is a schematic structural diagram of a camera module according to an embodiment of this application;
FIG. 2B is a schematic diagram of photographing a first-side target object according to an embodiment of this application;
FIG. 2C is a schematic diagram of photographing a second-side target object according to an embodiment of this application;
FIG. 2D is a schematic diagram of photographing a second-side target object according to an embodiment of this application;
FIG. 2E is a schematic flowchart of wide-angle photographing according to an embodiment of this application;
FIG. 2F is a schematic flowchart of wide-angle photographing according to an embodiment of this application;
FIG. 3A is a schematic structural diagram of a camera module according to an embodiment of this application;
FIG. 3B is a schematic sectional view of a camera module according to an embodiment of this application;
FIG. 4A is a schematic structural diagram of a camera module according to an embodiment of this application;
FIG. 4B is a schematic sectional view of a camera module according to an embodiment of this application;
FIG. 4C is a schematic diagram of photographing a first-side target object according to an embodiment of this application;
FIG. 4D is a schematic diagram of photographing a second-side target object according to an embodiment of this application;
FIG. 4E is a schematic diagram of an MEMS micro-mirror reflector according to an embodiment of this application;
FIG. 5 is a schematic structural diagram of a camera module according to an embodiment of this application;
FIG. 6 is a schematic structural diagram of a camera module according to an embodiment of this application;
FIG. 7A is a schematic structural diagram of a camera module according to an embodiment of this application;
FIG. 7B is a schematic sectional view of a camera module according to an embodiment of this application;
FIG. 8 is a schematic structural diagram of a camera module according to an embodiment of this application;
FIG. 9 is a schematic sectional view of a camera module according to an embodiment of this application;
FIG. 10 is a flowchart of a photographing method according to an embodiment of this application; and
FIG. 11 is a block diagram of a terminal device according to an embodiment of this application.

### DESCRIPTION OF EMBODIMENTS

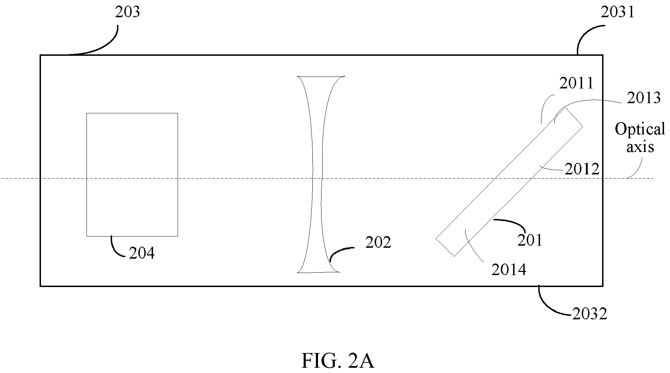

FIG. 2A is a schematic structural diagram of a camera module according to an embodiment of this application. Referring to FIG. 2A, the camera module includes a rotatable reflector 201, a lens group 202, a housing 203, and an image sensor 204.

In a process in which the camera module photographs a target object, the rotatable reflector 201 is configured to receive an optical signal formed by reflecting the target object. The lens group 202 includes at least one lens. A focal length of the lens group 202 may be adjusted by using the at least one lens, to adjust a focal length of the camera module. The housing 203 is configured to protect the camera module, to prevent internal devices of the camera module from being dusty. The target object is a target photographed by using the camera module, and may be a person, a plant, an animal, or the like. A type of the target object is not limited in this embodiment of this application. The image sensor 204 includes a light sensitive chip. The image sensor 204 can convert a received optical signal into an electrical signal by using the light sensitive chip, to generate an image. The light sensitive chip may be a charge coupled device (Charge Coupled Device, CCD), a metal oxide semiconductor (Complementary Metal-Oxide Semiconductor, CMOS), or the like. A type of the light sensitive chip is not limited in this embodiment of this application.

The housing 203 includes a first surface 2031 and a second surface 2032. The first surface 2031 is opposite to the second surface 2032.

The rotatable reflector 201 includes a first mirror surface 2011 and a second mirror surface 2012. The first mirror surface 2011 is a reflective surface. The rotatable reflector 201 is divided into a first reflective area 2013 and a second reflective area 2014 by an optical axis of the lens group 202. A part of the first mirror surface 2011 located in the first reflective area 2013 is a first sub mirror surface.

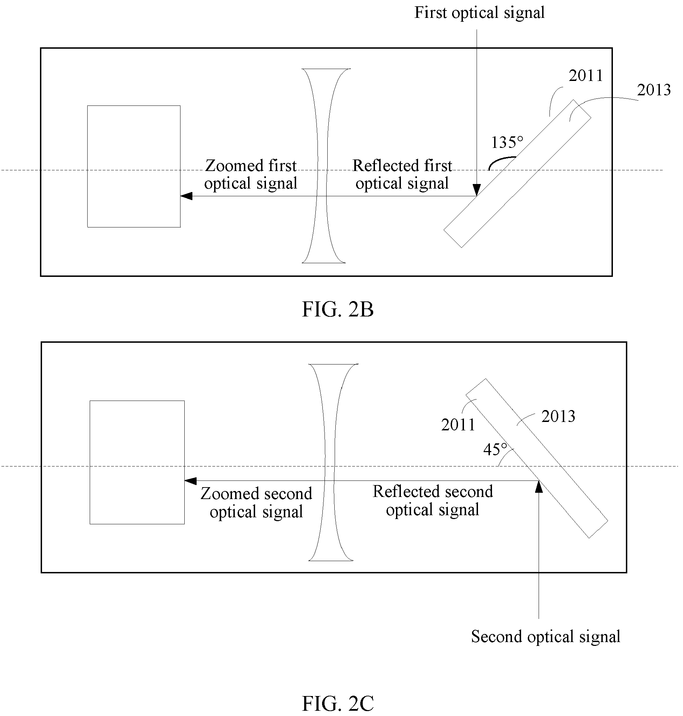

Specifically, referring to FIG. 2B, when a target object is located on a first side of the camera module, that is, on an external side of the first surface 2031, the rotatable reflector 201 is located at a first position, and the first mirror surface 2011 faces toward the lens group 202. The first mirror surface 2011 reflects a first optical signal entering from the first surface 2031. The reflected first optical signal is transmitted to the lens group 202 along a straight line along which the optical axis lies, and is zoomed by the lens group 202. The zoomed first optical signal is transmitted to the image sensor 204, so that the image sensor 204 generates a corresponding image based on the zoomed first optical signal. The image is a photographed target object image. When the rotatable reflector 201 is located at the first position, the first reflective area 2013 is closer to the first surface 2031 than the second reflective area 2014. An angle between the first sub mirror surface and a transmission direction of the reflected first optical signal on the straight line along which the optical axis lies is 135°, and a transmission direction of the first optical signal is perpendicular to the first surface.

It should be noted that the foregoing "an angle between the first sub mirror surface and a transmission direction of the reflected first optical signal on the straight line along which the optical axis lies is 135°" should be explained based on understanding of a person skilled in the art. 135° herein does not indicate that "an angle between the first sub mirror surface and a transmission direction of the reflected first optical signal on the straight line along which the optical axis lies" needs to be exactly 135°. A person skilled in the art should know that "an angle between the first sub mirror surface and a transmission direction of the reflected first optical signal on the straight line along which the optical axis lies in" may slightly deviate from 135°. Because an error is inevitable, it should not be simply understood herein that the angle needs to be 135°. The angle should be interpreted based on a common understanding of a person skilled in the art. A technical solution in which the angle slightly deviates from 135° shall also fall within the protection scope of this application, provided that an objective of this application can be achieved.

Referring to FIG. 2C, when a target object is located on a second side of the camera module, that is, on an external side of the second surface 2032, the rotatable reflector 201 is located at a second position, and the first mirror surface 2011 faces toward the lens group 202. The first mirror surface 2011 reflects a second optical signal entering from the second surface 2032. The reflected second optical signal is transmitted to the lens group 202 along the straight line along which the optical axis lies, and is zoomed by the lens group 202. The zoomed second optical signal is transmitted to the image sensor 204, so that the image sensor 204 generates a corresponding image based on the zoomed second optical signal. The image is a photographed target object image. When the rotatable reflector 201 is located at the second position, the first reflective area 2013 is closer to the first surface 2031 than the second reflective area 2014. An angle between the first sub mirror surface and a transmission direction of the reflected second optical signal on the straight line along which the optical axis lies is 45°, and a transmission direction of the second optical signal is perpendicular to the second surface.

It should be noted that the foregoing "an angle between the first sub mirror surface and a transmission direction of the reflected second optical signal on the straight line along which the optical axis lies is 45°" should be explained based on understanding of a person skilled in the art. 45° herein does not indicate that "an angle between the first sub mirror surface and a transmission direction of the reflected second optical signal on the straight line along which the optical axis lies" needs to be exactly 45°. A person skilled in the art should know that "an angle between the first sub mirror surface and a transmission direction of the reflected second optical signal on the straight line along which the optical axis lies" may slightly deviate from 45°. Because an error is inevitable, it should not be simply understood herein that the angle needs to be 45°. The angle should be interpreted based on a common understanding of a person skilled in the art. A technical solution in which the angle slightly deviates from 45° shall also fall within the protection scope of this application, provided that an objective of this application can be achieved.

It should be noted that because the camera module uses a same rotatable reflector 201 to photograph a first-side image or a second-side image, it can be ensured that the photographed first-side image and second-side image have same picture quality.

Optionally, a first optical lens may be disposed on the first surface 2031, and a second optical lens may be disposed on the second surface 2032. In a process in which the rotatable reflector 201 receives the first optical signal reflected by the target object on the first side, the first optical signal may be transmitted to the rotatable reflector 201 through the first optical lens, to generate the first-side image. However, in a process in which the rotatable reflector 201 receives the second optical signal reflected by the target object on the second side, the second optical signal may be transmitted to the rotatable reflector 201 through the second optical lens, to generate the second-side image. The first optical lens and the second optical lens are configured to receive an optical signal reflected by a target object. Moreover, a photographing range of the camera module may be expanded by using the first optical lens and the second optical lens.

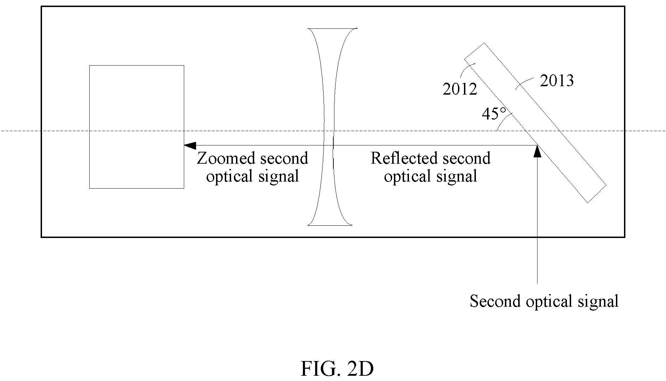

Optionally, referring to FIG. 2D, the rotatable reflector 201 further includes a second mirror surface 2012 opposite to the first mirror surface 2011, and the second mirror surface 2012 is a reflective surface.

When the rotatable reflector 201 is located at the second position, the second mirror surface 2012 faces toward the lens group 202. The second mirror surface 2012 reflects the second optical signal entering from the second surface 2032. The reflected second optical signal is transmitted to the lens group 202 along the straight line along which the optical axis lies, and is zoomed by the lens group 202. The zoomed second optical signal is transmitted to the image sensor 204, so that the image sensor 204 generates an image based on the zoomed second optical signal. When the rotatable reflector 201 is located at the second position, the first reflective area 2013 is closer to the second surface 2032 than the second reflective area 2014, and an angle between the first sub mirror surface and a transmission direction of the reflected second optical signal on the straight line along which the optical axis lies is 135°.

A first point that needs to be noted is that when both the first mirror surface 2011 and the second mirror surface 2012 are reflective surfaces, and the rotatable reflector is located at the first position, the rotatable reflector may be clockwise rotated to the second position or anticlockwise rotated to the second position.

A second point that needs to be noted is that types of both the first mirror surface 2011 and the second mirror surface 2012 may be any one of a plane, a convex surface, or a concave surface, and may be combined in any manner to form the rotatable reflector 201.

According to the invention, the first mirror surface 2011 is a concave surface, and the second mirror surface 2012 is a convex surface; or the first mirror surface 2011 is a convex surface, and the second mirror surface 2012 is a concave surface.

Based on the embodiment shown in FIG. 2A, to photograph target objects at different positions, the rotatable reflector 201 may be sequentially rotated to a plurality of designated positions. The image sensor 204 generates a plurality of images corresponding to the plurality of designated positions, and merges the plurality of images to form a wide-angle image.

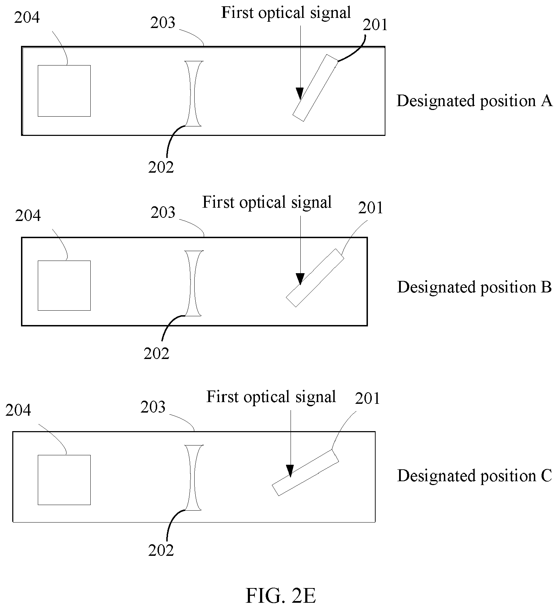

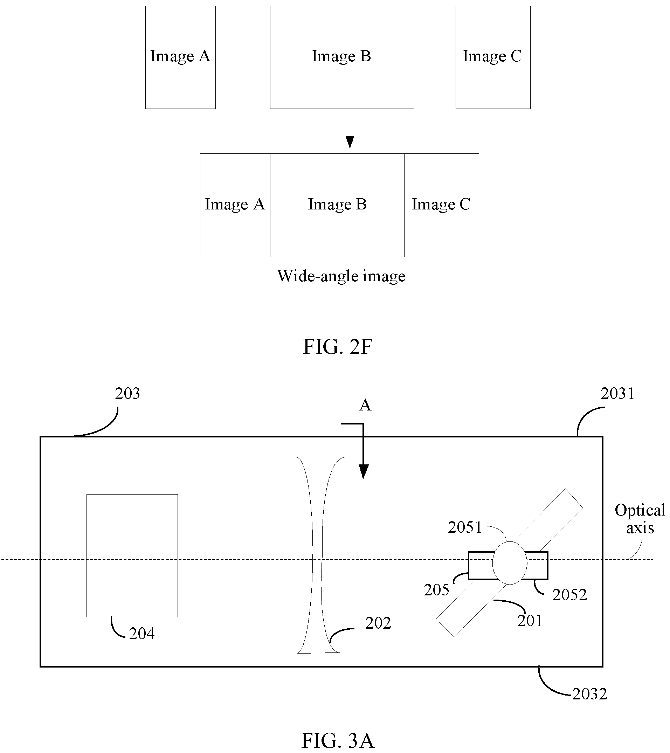

For example, referring to FIG. 2E and FIG. 2F, the rotatable reflector 201 may be sequentially rotated to a designated position A, a designated position B, and a designated position C. The image sensor 204 sequentially generates an image A corresponding to the designated position A, an image B corresponding to the designated position B, and an image C corresponding to the designated position C. Then, the image sensor 204 may composite the image A, the image B, and the image C to form a wide-angle image, thereby implementing a wide-angle photographing function.

The camera module provided in this embodiment of this application includes the rotatable reflector, the lens group, the housing, and the image sensor. When the rotatable reflector is located at the first position, the first optical signal entering from the first surface is reflected, and the reflected first optical signal is transmitted along the straight line along which the optical axis lies, so that the corresponding image is generated based on the reflected first optical signal. However, when the rotatable reflector is located at the second position, the second optical signal entering from the second surface is reflected, and the reflected second optical signal is transmitted along the straight line along which the optical axis lies, so that the corresponding image is generated based on the reflected second optical signal. Both a target object on a first side and a target object on a second side may be photographed by using the rotatable reflector, so that a dual-channel photographing function is implemented. Moreover, because only one reflector is disposed in the camera module, a quantity of reflectors is reduced, thereby reducing occupied space, a size of the camera module, and space occupied by the camera module.

Further, the rotatable reflector may be sequentially rotated to the plurality of designated positions. The image sensor generates the plurality of images corresponding to the plurality of designated positions, and merges the plurality of images to form the wide-angle image, thereby implementing the wide-angle photographing function.

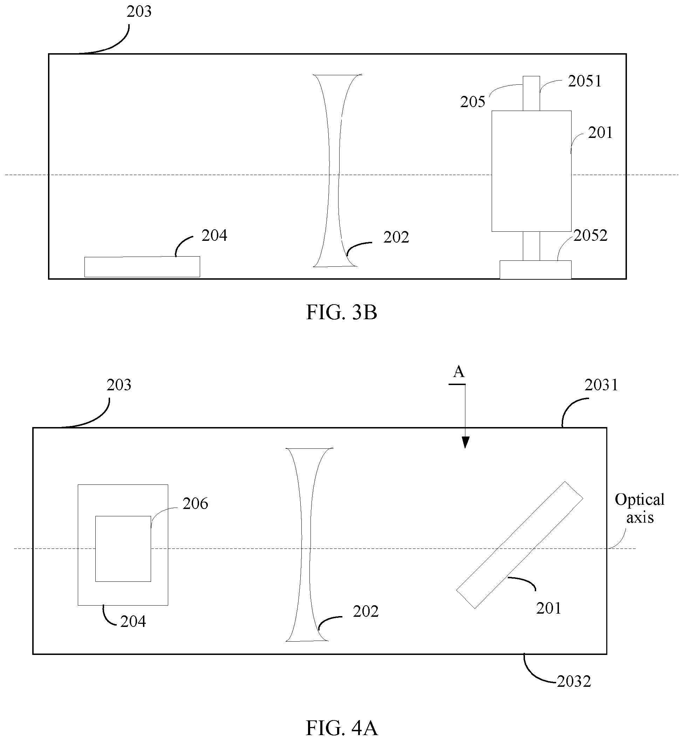

FIG. 3A is a schematic structural diagram of a camera module according to an embodiment of this application. A sectional view of FIG. 3A along a direction A is shown in FIG. 3B. Referring to FIG. 3A and FIG. 3B, based on the camera module shown in FIG. 2A, the camera module further includes a motor 205.

In this embodiment of this application, to satisfy a requirement that the camera module photographs a first-side image and a second-side image, a position at which the rotatable reflector is located needs to be controlled. Therefore, the camera module is provided with the motor 205, and the motor 205 is configured to drive the rotatable reflector 201 to rotate. Specifically, the motor 205 includes a motor shaft 2051 and a drive circuit 2052. The rotatable reflector 201 is disposed on the motor shaft 2051. The drive circuit 2052 is configured to drive the motor shaft 2051 to rotate, to drive the rotatable reflector 201 to rotate. To be specific, the rotatable reflector 201 rotates with rotation of the motor shaft 2051. The drive circuit 2052 may control the position at which the rotatable reflector 201 is located by controlling a rotation angle of the motor shaft 2051, so that the camera module can photograph both a first-side target object and a second-side target object, implementing a dual-channel photographing function.

The drive circuit 2052 may be a driver integrated circuit (Driver integrated circuit, Driver IC).

When a target object is located on a first side of the camera module, the motor shaft 2051 controls the rotatable reflector 201 to rotate to a first position, a first optical signal is transmitted to the image sensor 204 through the lens group 202. The image sensor 204 generates an image, namely, the first-side image, based on the received optical signal.

When a target object is located on a second side of the camera module, the motor shaft 2051 controls the rotatable reflector 201 to rotate to a second position. The second position is an angle at which a second optical signal reflected by the target object on the second side can be received. The second optical signal is transmitted to the image sensor 204 through the lens group 202. The image sensor 204 generates an image, namely, the second-side image, based on the received optical signal.

In addition, to reduce a probability that the rotation angle of the motor shaft 2051 deviates, the drive circuit 2052 may be a closed-loop drive circuit capable of detecting the rotation angle. The drive circuit 2052 may include a Hall effect sensor. The Hall effect sensor detects the rotation angle of the motor shaft 2051.

For example, the drive circuit 2052 controls the motor shaft 2051 to rotate by 20°. However, the motor shaft 2051 rotates, and the drive circuit 2052 obtains, by using the Hall effect sensor, that the rotation angle of the motor shaft 2051 is 18°. In this case, the drive circuit 2052 controls the motor shaft 2051 to rotate again by 2°, to ensure accuracy of the rotation angle, improving precision.

In addition, the motor 205 may have a lock function. To be specific, when rotation of the motor shaft 2051 ends, the drive circuit 2052 may fix a position of the motor shaft 2051. When the camera module vibrates and shakes, the position of the motor shaft 2051 is maintained unchanged, to ensure that a position of the rotatable reflector 201 is maintained unchanged, and to ensure that a direction of an optical signal reflected by the rotatable reflector 201 is maintained stable.

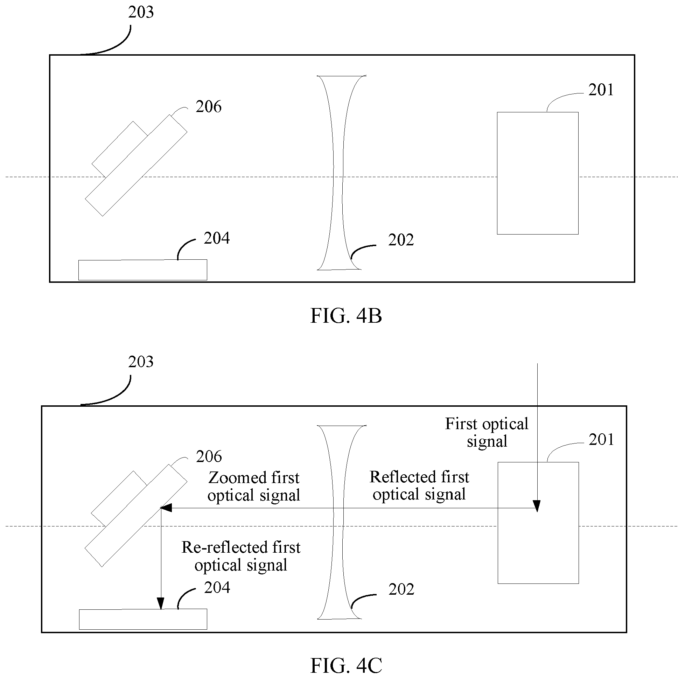

FIG. 4A is a schematic structural diagram of a camera module according to an embodiment of this application. A sectional view of FIG. 4A along a direction A is shown in FIG. 4B. Referring to FIG. 4A and FIG. 4B, based on the camera module shown in FIG. 2A, the camera module further includes a micro-electro-mechanical system (Micro-Electro-Mechanical System, MEMS) micro-mirror reflector 206.

Referring to FIG. 4C, when the rotatable reflector 201 is located at a first position, a zoomed first optical signal is transmitted to the MEMS micro-mirror reflector. The MEMS micro-mirror reflector 206 reflects the reflected first optical signal. The re-reflected first optical signal is transmitted to the image sensor 204, and the image sensor 204 generates a corresponding image based on the re-reflected first optical signal.

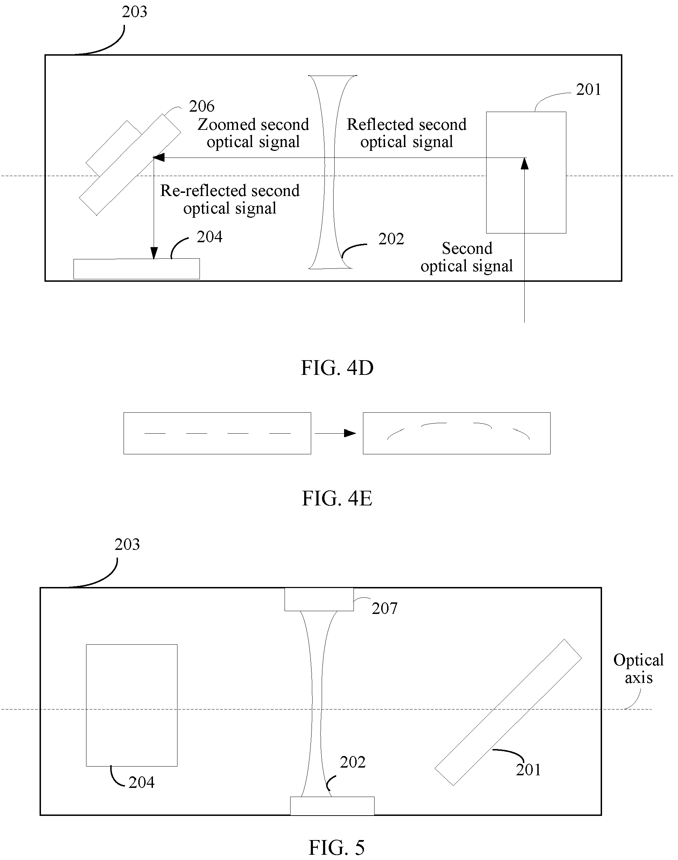

Referring to FIG. 4D, when the rotatable reflector 201 is located at a second position, a reflected second optical signal is transmitted to the MEMS micro-mirror reflector 206. The MEMS micro-mirror reflector 206 reflects the reflected second optical signal. The re-reflected second optical signal is transmitted to the image sensor 204, and the image sensor 204 generates an image based on the re-reflected second optical signal.

The MEMS micro-mirror reflector 206 is opposite to a light sensitive chip of the image sensor 204, and is configured to change a transmission direction of an optical signal, to ensure that the light sensitive chip of the image sensor 204 can receive the optical signal. When the lens group 202 emits an optical signal, the MEMS micro-mirror reflector 206 reflects the optical signal. A direction of a re-reflected optical signal is perpendicular to a plane in which the image sensor 204 is located, to ensure that the re-reflected optical signal is transmitted to an area in which the light sensitive chip of the image sensor 204 is located. After receiving the re-reflected optical signal, the light sensitive chip of the image sensor 204 can generate an image based on the re-reflected optical signal.

Referring to FIG. 1A, in the prior art, a plane in which the image sensor 105 is located is perpendicular to a straight line along which an optical axis of the lens group 103 lies. Therefore, a thickness of the camera module is relatively large. Consequently, a size of the camera module is relatively large, and occupied space is relatively large.

However, in this embodiment of this application, a plane in which the image sensor 204 is located is parallel to a straight line along which the optical axis of the lens group 202 lies. Because the MEMS micro-mirror reflector 206 changes the transmission direction of the optical signal, the optical signal whose transmission direction is changed can be transmitted to the light sensitive chip of the image sensor 204, so that the light sensitive chip of the image sensor 204 can receive the optical signal reflected by a target object, thereby generating an image of the target object. Moreover, compared with a situation in which the plane in which the image sensor 204 is located is perpendicular to the straight line along which the optical axis lies, when the plane in which the image sensor 204 is located is parallel to the straight line along which the optical axis lies, a thickness of the camera module may be reduced, and a size of the camera module may be reduced.

Further, the MEMS micro-mirror reflector 206 may include at least one micro-mirror, and control a rotation angle of each micro-mirror by controlling an intensity of a current flowing through the corresponding micro-mirror, so that a focal point of each micro-mirror is located on the light sensitive chip of the image sensor 204.

Therefore, regardless of whether the rotatable reflector 201 is located at the first position or at the second position, when the at least one micro-mirror receives a plurality of optical signals, the at least one micro-mirror can reflect the received optical signals based on the corresponding rotation angle, so that focal points of the reflected optical signals are located in a designated area of the image sensor 204, thereby implementing a focusing function, and ensuring that the image generated by the image sensor 204 is clear. For each micro-mirror, when the intensity of the current flowing through the micro-mirror is different, the rotation angle is also different. For example, a higher current intensity indicates a larger rotation angle.

For example, referring to FIG. 4E, the MEMS micro-mirror reflector 206 includes four micro-mirrors. Intensities of currents flowing through the four micro-mirrors are controlled, so that rotation angles of the four micro-mirrors are shown in FIG. 4E. In this case, focal points of the four micro-mirrors are located in the designated area of the image sensor 204.

During actual application, the lens group 202 may implement the focusing function by using at least one lens. However, when the camera module includes the MEMS micro-mirror reflector 206, the MEMS micro-mirror reflector 206 may alternatively be used as a lens, and implements the focusing function jointly with the at least one lens in the lens group 202. In this case, a quantity of lens included in the lens group 202 may be reduced, thereby further reducing the size of the camera module.

In another possible implementation, the camera module may include the image sensor 204 and a common reflector. A transmission direction of the first optical signal or the second optical signal may still be changed by using the common reflector, so that the image sensor 204 can receive the optical signal reflected by the target object, to generate the image of the target object. In this case, that the plane in which the image sensor 204 is located is parallel to the straight line along which the optical axis of the lens group 202 lies may still be ensured, the thickness of the camera module may be still reduced, and the size of the camera module is reduced.

FIG. 5 is a schematic structural diagram of a camera module according to an embodiment of this application. Referring to FIG. 5, based on the camera module shown in FIG. 2A, the camera module further includes a motor group 207.

The lens group 202 is configured to change a focal length. The lens group 202 includes N lens sequentially arranged along a straight line along which the optical axis lies. The motor group 207 includes N motors. The N motors correspond one-to-one to the N lens, and each motor is configured to drive the corresponding lens to move along the straight line along which the optical axis lies, to adjust a focal length of the lens group, where N is an integer greater than or equal to 1. FIG. 5 is described by using a case in which N is 1.

Each lens may include a convex lens or a concave lens. The focal length of the lens group 202 can be lengthened or shortened by changing a relative position of each lens in the lens group 202, and adjust the focal length of the camera module, thereby photographing both a distant target object and a near target object.

Each motor may be a step motor, an ultrasonic motor, a voice coil motor, or another type of motor. This is not limited in this embodiment.

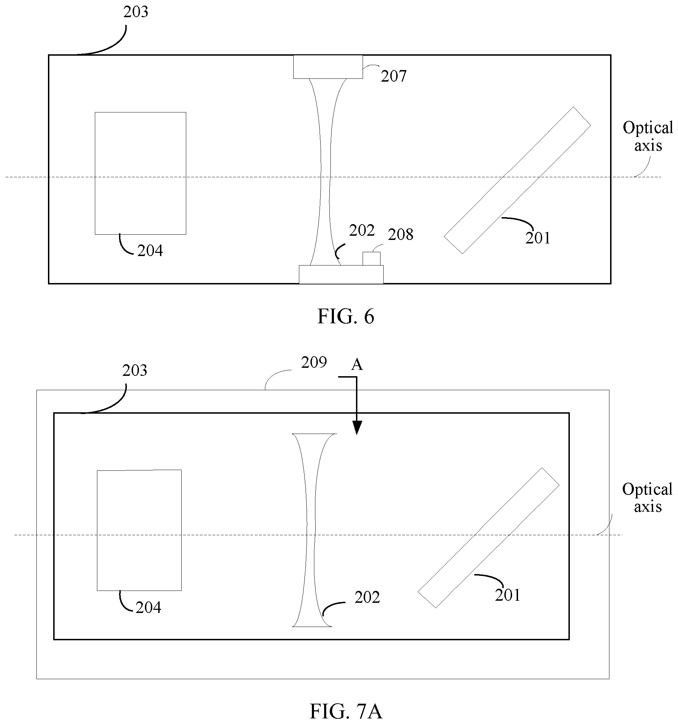

In a possible implementation, referring to FIG. 6, the camera module further includes a distance sensor 208. The distance sensor 208 is disposed on the motor group 207.

Distances between different target objects and the lens group 202 are different. To enable the focal length of the lens group 202 to match the distance, to photograph a clear target object image, in this embodiment of this application, the distance sensor 208 is disposed on a motor that is of the N motors and that is close to the rotatable reflector 201. The distance sensor 208 can rapidly detect a distance between a target object and the distance sensor 208, and controls movement of the motor group 208 by using the distance as a benchmark, to adjust the focal length of the lens group 202, so that the adjusted focal length matches the distance, thereby implementing precise focusing and increasing a focusing speed.

Specifically, the distance sensor 208 obtains the distance, determines at least one motor in the motor group 207 that needs to be moved and a movement direction and a movement distance of the at least one motor that needs to be moved, and controls the at least one motor that needs to be moved to move in the movement direction and by the movement distance, to drive at least one lens corresponding to the at least one motor that needs to be moved to move. To be specific, a relative position of the at least one lens in the lens group 202 can be changed by using the distance sensor 208, so that the focal length of the lens group 202 matches the distance. Compared with a distance sensor independently disposed outside the camera module, when the distance sensor is disposed inside the camera module, an overall size of the camera module and the distance sensor may be reduced, to prevent the distance sensor from occupying additional space, so that a structure of the camera module is more integrated.

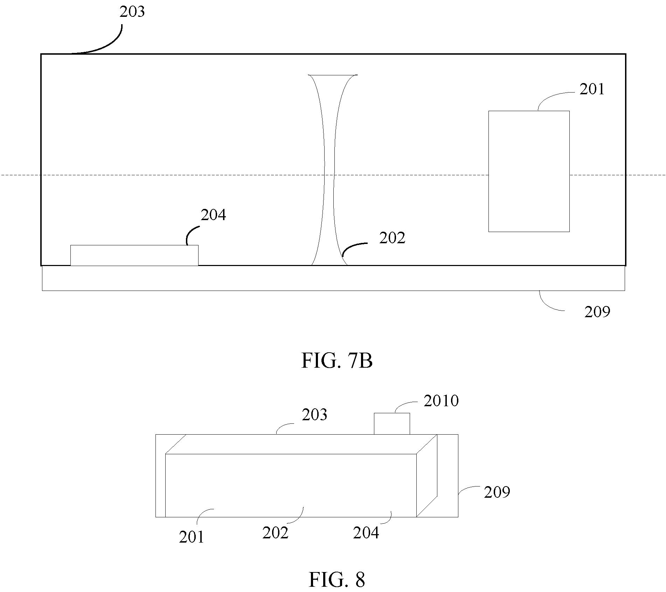

FIG. 7A is a schematic structural diagram of a camera module according to an embodiment of this application. A sectional view of FIG. 7A along a direction A is shown in FIG. 7B. Referring to FIG. 7A and FIG. 7B, based on the camera module shown in FIG. 2A, the camera module further includes a circuit board 209. The rotatable reflector 201, the lens group 202, and the image sensor 204 are all located on a same surface of the circuit board 209.

The circuit board 209 may be a printed circuit board (Printed Circuit Board, PCB), a flexible printed circuit (Flexible Printed Circuit, FPC), or may be another type of circuit board. This is not limited in this embodiment.

To enable the rotatable reflector 201, the lens group 202, and the image sensor 204 to be fixed on the circuit board 209, the rotatable reflector 201, the lens group 202, and the image sensor 204 may be physically connected to the circuit board 209. The physical connection may include manners such as bonding or welding. The bonding may be glue bonding or bonding using another material. The welding may be laser welding or another welding manner. This is not limited in this embodiment of this application. In addition, when the welding manner is used, the rotatable reflector 201, the lens group 202, and the image sensor 204 may be electrically connected to the circuit board 209, facilitating design and reducing process difficulty.

The camera module may be of a sealed structure, so that a loss generated in a process in which an optical signal reflected by a target object is transmitted to the image sensor 204 is reduced, so that an image generated by the image sensor 204 is clearer.

Referring to FIG. 8, in a possible implementation, the camera module may include a connector 2010. The connector 2010 and the circuit board 209 are welded to form an integrated structure. All of the rotatable reflector 201, the lens group 202, and the image sensor 204 may be connected to an external power supply and a control circuit by using the connector 2010.

All the foregoing optional technical solutions may be arbitrarily combined to form an optional embodiment of this application, and details are not described herein.

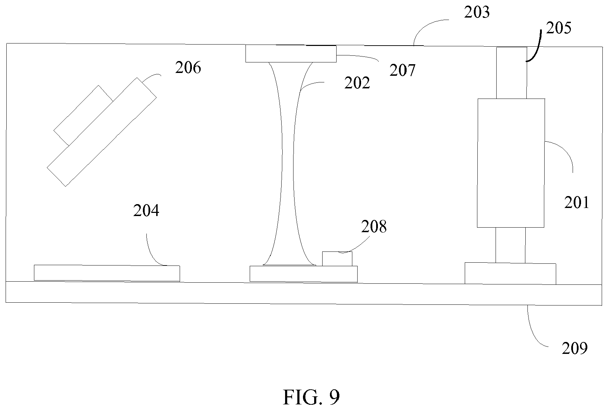

With reference to the foregoing plurality of possible implementations, a schematic structural diagram of the camera module may be shown in FIG. 9. With reference to FIG. 9, the camera module includes the rotatable reflector 201, the lens group 202, the housing 203, the image sensor 204, the motor 205, the MEMS micro-mirror reflector 206, the motor group 207, the distance sensor 208, and the circuit board 209.

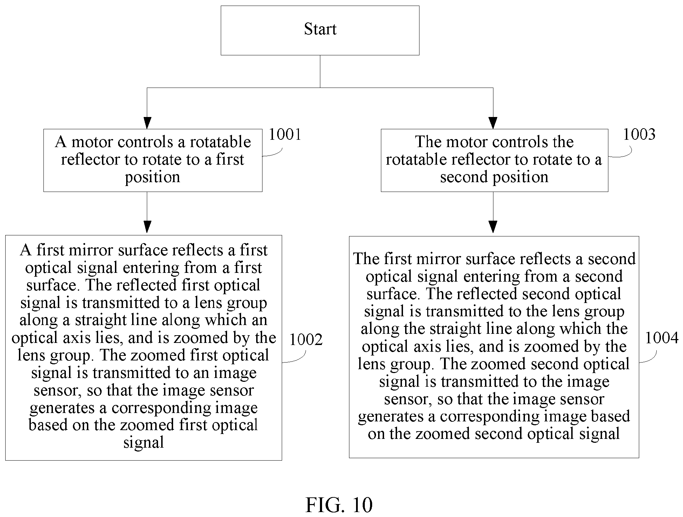

FIG. 10 is a flowchart of a photographing method according to an embodiment of this application. This embodiment of this application is applied to the camera module shown in FIG. 2A. The camera module includes at least a rotatable reflector, a lens group, a housing, an image sensor, and a motor. The housing includes a first surface and a second surface. The first surface is opposite to the second surface. A first mirror surface of the rotatable reflector is a reflective surface. The rotatable reflector is divided into a first reflective area and a second reflective area by a plane in which an optical axis of the lens group lies. Apart of the first mirror surface located in the first reflective area is a first sub mirror surface.

Referring to FIG. 10, the method includes the following steps.
1001. The motor controls the rotatable reflector to rotate to a first position.
1002. The first mirror surface reflects a first optical signal entering from the first surface. The reflected first optical signal is transmitted to the lens group along a straight line along which the optical axis lies, and is zoomed by the lens group. The zoomed first optical signal is transmitted to the image sensor, so that the image sensor generates a corresponding image based on the zoomed first optical signal. When the rotatable reflector is located at the first position, the first reflective area is closer to the first surface than the second reflective area. An angle between the first sub mirror surface and a transmission direction of the reflected first optical signal on the straight line along which the optical axis lies is 135°, and a transmission direction of the first optical signal is perpendicular to the first surface.
1003. The motor controls the rotatable reflector to rotate to a second position.
1004. The first mirror surface reflects a second optical signal entering from the second surface. The reflected second optical signal is transmitted to the lens group along the straight line along which the optical axis lies, and is zoomed by the lens group. The zoomed second optical signal is transmitted to the image sensor, so that the image sensor generates a corresponding image based on the zoomed second optical signal. When the rotatable reflector is located at the second position, the first reflective area is closer to the first surface than the second reflective area. An angle between the first sub mirror surface and a transmission direction of the reflected second optical signal on the straight line along which the optical axis lies is 45°, and a transmission direction of the second optical signal is perpendicular to the second surface.

According to the method provided in this embodiment of this application, only one rotatable reflector is used. The first optical signal entering from the first surface is reflected by controlling the rotatable reflector to rotate to the first position. The reflected first optical signal is transmitted to the lens group and zoomed by the lens group. The zoomed first optical signal is transmitted to the image sensor, so that the image sensor generates an image of a first-side target object. The second optical signal entering from the second surface is reflected by controlling the rotatable reflector to rotate to the second position. The reflected second optical signal is transmitted to the lens group and zoomed by the lens group. The zoomed second optical signal is transmitted to the image sensor, so that the image sensor generates an image of a second-side target object. Both the first-side target object and the second-side target object may be photographed, so that a dual-channel photographing function is implemented. Moreover, because only one reflector is disposed in the camera module, a quantity of reflectors is reduced. Because space occupied by one reflector is relatively small, a size of the camera module is reduced and occupied space is reduced.

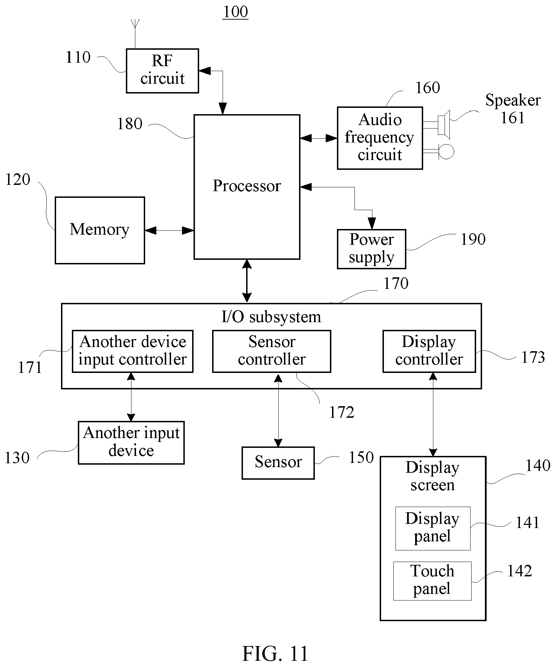

FIG. 11 is a block diagram of a terminal device according to an embodiment of this application. The terminal device includes the camera module according to any one of the foregoing embodiments shown in FIG. 1 to FIG. 10 and a memory. The camera module is configured to photograph an image. The memory is configured to store the image. In addition, the terminal device may further include another device.

The terminal device may include a mobile phone, a tablet computer, a personal digital assistant (Personal Digital Assistant, PDA), a point of sale (Point of Sale, POS), an in-vehicle computer, and the like.

For example, the terminal device is a mobile phone. FIG. 11 is a block diagram of a part of a structure of a mobile phone 100 related to this embodiment of this application. Referring to FIG. 11, the mobile phone 100 includes components such as a radio frequency (Radio Frequency, RF) circuit 110, a memory 120, another input device 130, a display screen 140, a sensor 150, an audio frequency circuit 160, an I/O subsystem 170, a processor 180, and a power supply 190. A person skilled in the art may understand that the structure of the mobile phone shown in FIG. 11 does not constitute a limitation to the mobile phone, and the mobile phone may include more components or fewer components than those shown in the figure, or some components may be combined, or some components may be separated, or a different component deployment may be used. A person skilled in the art may understand that the display screen 140 belongs to a user interface (User Interface, UI), and the mobile phone 100 may include more or fewer user interfaces than those shown in the figure.

The following specifically describes the components of the mobile phone 100 with reference to FIG. 11.

The RF circuit 110 may be configured to receive and send a signal in an information receiving and sending process or a call process. Specifically, the RF circuit receives downlink information from a base station, then delivers the downlink information to the processor 180 for processing, and sends related uplink data to the base station. Usually, the RF circuit includes, but is not limited to, an antenna, at least one amplifier, a transceiver, a coupler, a low noise amplifier (Low Noise Amplifier, LNA), a duplexer, and the like. In addition, the RF circuit 110 may also communicate with a network and another device through wireless communication. The wireless communication may use any communications standard or protocol, which includes, but is not limited to, Global System for Mobile Communications (Global System for Mobile Communications, GSM), General Packet Radio Service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), email, Short Messaging Service (Short Messaging Service, SMS), and the like.

The memory 120 may be configured to store a software program and a module. The processor 180 runs the software program and the module stored in the memory 120, to implement various functional applications and data processing of the mobile phone 100. The memory 120 may mainly include a program storage area and a data storage area. The program storage area may store an operating system, an application program required by at least one function (such as a sound playback function and an image playback function), and the like. The data storage area may store data (such as audio data and a phone book) created according to use of the mobile phone 100, and the like. In addition, the memory 120 may include a high speed random access memory, and may further include a non-volatile memory, such as at least one magnetic disk storage device, a flash memory, or another volatile solid-state storage device.

The another input device 130 may be configured to receive input digit or character information, and generate a keyboard signal input related to user setting and function control of the mobile phone 100. Specifically, the another input device 130 may include but is not limited to one or more of a physical keyboard, a function key (for example, a volume control key or a power on/off key), a trackball, a mouse, a joystick, or an optical mouse (the optical mouse is a touch-sensitive surface that does not display a visible output, or an extension of a touch-sensitive surface formed by a touchscreen). The another input device 130 is connected to another input device controller 171 of the I/O subsystem 170, and exchanges a signal with the processor 180 under control of the another input device controller 171.

The display screen 140 may be configured to display information entered by a user or information provided to a user, and various menus of the mobile phone 100, and may further receive a user input. Specifically, the display screen 140 may include a display panel 141 and a touch panel 142. The display panel 141 may be configured by using a liquid crystal display (Liquid Crystal Display, LCD), an organic light-emitting diode (Organic Light-Emitting Diode, OLED), or the like. The touch panel 142 is also referred to as a touchscreen, a touch-sensitive screen, or the like, and may collect a contact or non-contact operation of the user on or near the touch panel 142 (such as an operation of the user on or near the touch panel 142 by using any suitable object or attachment such as a finger or a touch pen, or a motion sensing operation may be included, where the operation includes a single-point control operation, a multi-point control operation, and another type of operation), and drive a corresponding connection apparatus according to a preset program. Optionally, the touch panel 142 may include two parts: a touch detection apparatus and a touch controller. The touch detection apparatus detects a touch position and a gesture of the user, detects a signal generated by the touch operation, and transfers the signal to the touch controller. The touch controller receives touch information from the touch detection apparatus, converts the touch information into information that can be processed by the processor and sends the information to the processor 180, and can receive a command sent by the processor 180 and execute the command. In addition, the touch panel 142 may be a resistive, capacitive, infrared, or surface sound wave type touch panel, or the touch panel 142 may be implemented by using any technology of future development. Further, the touch panel 142 may cover the display panel 141. The user may perform, based on content (the displayed content includes, but is not limited to, a soft keyboard, a virtual mouse, a virtual key, an icon, and the like) displayed on the display panel 141, an operation on or near the touch panel 142 covering the display panel 141. After detecting the operation on or near the touch panel 142, the touch panel 142 transfers the operation to the processor 180 by using the I/O subsystem 170, to determine the user input. Subsequently, the processor 180 provides a corresponding visual output on the display panel 141 by using the I/O subsystem 170 based on the user input. Although, in FIG. 11, the touch panel 142 and the display panel 141 are used as two separate parts to implement input and output functions of the mobile phone 100, in some embodiments, the touch panel 142 and the display panel 141 may be integrated to implement the input and output functions of the mobile phone 100.

The mobile phone 100 may further include at least one sensor 150, such as an optical sensor, a motion sensor, and another sensor. Specifically, the optical sensor may include an ambient light sensor and a proximity sensor. The ambient light sensor may adjust luminance of the display panel 141 based on brightness of the ambient light. The proximity sensor may switch off the display panel 141 and/or backlight when the mobile phone 100 is moved to an ear. As one type of motion sensor, an acceleration sensor may detect magnitude of accelerations in various directions (usually on three axes), may detect magnitude and a direction of the gravity when the mobile phone 100 is static, and may be applied to an application that recognizes the gesture of the mobile phone (for example, switching between landscape orientation and portrait orientation, a related game, and magnetometer gesture calibration), a function related to vibration recognition (such as a pedometer and a knock), and the like. For other sensors such as a gyroscope, a barometer, a hygrometer, a thermometer, and an infrared sensor that may be further configured for the mobile phone 100, details are not described herein.

The audio frequency circuit 160, a speaker 161, and a microphone 162 may provide audio interfaces between the user and the mobile phone 100. The audio circuit 160 may convert received audio data into a signal and transmit the signal to the speaker 161. The speaker 161 converts the signal into a sound signal for output. On the other hand, the microphone 162 converts a collected sound signal into a signal. The audio circuit 160 receives the signal and converts the signal into audio data, and outputs the audio data to the RF circuit 110 to send the audio data to, for example, another mobile phone, or outputs the audio data to the memory 120 for further processing.

The I/O subsystem 170 is configured to control input and output peripheral devices, and may include the another input device controller 171, a sensor controller 172, and a display controller 173. Optionally, one or more another input control device controllers 171 receive a signal from the another input device 130 and/or send a signal to the another input device 130. The another input device 130 may include a physical button (a pressing button, a rocker button, and the like), a dial pad, a slider switch, a joystick, a click scroll wheel, or an optical mouse (the optical mouse is a touch-sensitive surface that does not display a visible output, or an extension of a touch-sensitive surface formed by a touchscreen). It should be noted that, the another input control device controller 171 may be connected to any one or more of the foregoing devices. The display controller 173 in the I/O subsystem 170 receives a signal from the display screen 140 or sends a signal to the display screen 140. After the display screen 140 detects the user input, the display controller 173 converts the detected user input into interaction with an object displayed on the user interface of the display screen 140. That is, man-machine interaction is implemented. The sensor controller 172 may receive a signal from one or more sensors 150 and/or may send a signal to the one or more sensors 150.

The processor 180 is a control center of the mobile phone 100, and is connected to various parts of the mobile phone by using various interfaces and lines. By running or executing the software program and/or the module stored in the memory 120, and invoking data stored in the memory 120, the processor 180 performs various functions and data processing of the mobile phone 1000, thereby performing overall monitoring on the mobile phone. Optionally, the processor 180 may include one or more processing units. Preferably, the processor 180 may integrate an application processor and a modem processor. The application processor mainly processes an operating system, a user interface, an application program, and the like. The modem processor mainly processes wireless communication. It may be understood that the foregoing modem processor may alternatively not be integrated into the processor 180.

The mobile phone 100 further includes the power supply 190 (such as a battery) supplying power to the components. Preferably, the power supply may be logically connected to the processor 180 by using a power management system, to implement functions such as management of charging, discharging, and energy consumption by using the power management system.

Although not shown in the figure, the terminal 100 may further include a Bluetooth module and the like, and details are not described herein.

A person of ordinary skill in the art may understand that all or some of the steps of the embodiments may be implemented by using hardware or a program instructing related hardware. The program may be stored in a computer-readable storage medium. The storage medium may include: a read-only memory, a magnetic disk, an optical disc, or the like.

The foregoing descriptions are merely examples of the embodiments of this application, but are not intended to limit this application.

## Claims

1. A camera module, wherein the camera module comprises a rotatable reflector (201), a lens group (202), a housing (203), and an image sensor (204);
the housing (203) comprises a first surface (2031) and a second surface (2032), wherein the first surface (2031) is opposite to the second surface (2032);
a first mirror surface (2011) of the rotatable reflector (201) is a reflective surface, the rotatable reflector (201) is divided into a first reflective area (2013) and a second reflective area (2014) by a plane in which an optical axis of the lens group (202) lies, and a part of the first mirror surface (2011) located in the first reflective area (2013) is a first sub mirror surface, wherein the rotatable reflector (201) further comprises a second mirror surface (2012) opposite to the first mirror surface (2011), and the second mirror surface (2012) is a reflective surface; and;
when the rotatable reflector (201) is located at a first position, the first mirror surface (2011) reflects a first optical signal entering from the first surface (2031), the reflected first optical signal is transmitted along a straight line along which the optical axis lies, and a corresponding image is generated based on the reflected first optical signal, wherein when the rotatable reflector (201) is located at the first position, the first reflective area (2013) is closer to the first surface (2031) than the second reflective area (2014), an angle between the first sub mirror surface and a transmission direction of the reflected first optical signal on the straight line along which the optical axis lies is 135°, and a transmission direction of the first optical signal is perpendicular to the first surface (2031); and
when the rotatable reflector (201) is located at a second position, the second mirror surface (2012) reflects a second optical signal entering from the second surface (2032), the reflected second optical signal is transmitted along the straight line along which the optical axis lies, and a corresponding image is generated based on the reflected second optical signal, wherein when the rotatable reflector (201) is located at the second position, the first reflective area (2013) is closer to the second surface (2032) than the second reflective area (2014), an angle between the first sub mirror surface and a transmission direction of the reflected second optical signal on the straight line along which the optical axis lies is 135°, and a transmission direction of the second optical signal is perpendicular to the second surface (2032), **characterized in that** the rotatable reflector (201) is sequentially rotatable to a plurality of three or more designated positions, the image sensor (204) is configured to generate a plurality of images corresponding to the plurality of designated positions and to merge the plurality of images to form a wide-angle image, and
the first mirror surface (2011) is a concave surface, and the second mirror surface (2012) is a convex surface; or
the first mirror surface (2011) is a convex surface, and the second mirror surface (2012) is a concave surface.

2. The camera module according to claim 1, wherein the camera module further comprises a motor (205), and the motor (205) is configured to drive the rotatable reflector (201) to rotate.

3. The camera module according to claim 2, wherein the motor (205) comprises a drive circuit (2052) and a motor shaft (2051), the rotatable reflector (201) is disposed on the motor shaft (2051), and the drive circuit (2052) is configured to drive the motor shaft (2051) to rotate, to drive the rotatable reflector (201) to rotate.

4. The camera module according to any one of claims 1 to 3, wherein the camera module further comprises a motor group (207) ; and
the lens group (207) comprises N lenses sequentially arranged along the straight line along which the optical axis lies, the motor group (207) comprises N motors, the N motors correspond one-to-one to the N lenses, and each motor is configured to drive the corresponding lens to move along the straight line along which the optical axis lies, to adjust a focal length of the lens group (202), wherein N is an integer greater than or equal to 1.

5. The camera module according to any one of claims 1 to 4, wherein a plane in which the image sensor (204) is located is parallel to the straight line along which the optical axis lies.

6. The camera module according to any one of claims 1 to 5, wherein the camera module further comprises a circuit board (209), and the rotatable reflector (201), the lens group (202), and the image sensor (204) are all located on a same surface of the circuit board (209).

7. The camera module according to claim 1, wherein the rotatable reflector (201) is rotated from the first position to the second position.

8. A terminal device, comprising the camera module according to any one of claims 1 to 6 and a memory, wherein
the camera module is configured to photograph an image; and
the memory is configured to store the image.

## Patentansprüche

1. Kameramodul, wobei das Kameramodul einen drehbaren Reflektor (201), eine Linsengruppe (202), ein Gehäuse (203) und einen Bildsensor (204) umfasst;
wobei das Gehäuse (203) eine erste Fläche (2031) und eine zweite Fläche (2032) umfasst, wobei die erste Fläche (2031) der zweiten Fläche (2032) gegenüberliegt;
wobei eine erste Spiegelfläche (2011) des drehbaren Reflektors (201) eine reflektierende Fläche ist, wobei der drehbare Reflektor (201) durch eine Ebene, in der eine optische Achse der Linsengruppe (202) liegt, in einen ersten reflektierenden Bereich (2013) und einen zweiten reflektierenden Bereich (2014) aufgeteilt ist und ein Teil der ersten Spiegelfläche (2011), der sich in dem ersten reflektierenden Bereich (2013) befindet, eine erste Spiegelteilfläche ist, wobei der drehbare Reflektor (201) ferner eine zweite Spiegelfläche (2012) gegenüber der ersten Spiegelfläche (2011) umfasst und die zweite Spiegelfläche (2012) eine reflektierende Fläche ist; und
wenn sich der drehbare Reflektor (201) in einer ersten Position befindet, die erste Spiegelfläche (2011) ein erstes optisches Signal reflektiert, das von der ersten Fläche (2031) eintritt, wobei das reflektierte erste optische Signal entlang einer geraden Linie übertragen wird, entlang derer die optische Achse liegt, und ein entsprechendes Bild auf Grundlage des reflektierten ersten optischen Signals erzeugt wird, wobei, wenn sich der drehbare Reflektor (201) in der ersten Position befindet, der erste reflektierende Bereich (2013) näher an der ersten Fläche (2031) ist als der zweite reflektierende Bereich (2014), wobei ein Winkel zwischen der ersten Spiegelteilfläche und einer Übertragungsrichtung des reflektierten ersten optischen Signals auf der geraden Linie, entlang derer die optische Achse liegt, 135 ° beträgt und eine Übertragungsrichtung des ersten optischen Signals senkrecht zu der ersten Fläche (2031) ist; und
wenn sich der drehbare Reflektor (201) in einer zweiten Position befindet, die zweite Spiegelfläche (2012) ein zweites optisches Signal reflektiert, das von der zweiten Fläche (2032) eintritt, wobei das zweite optische Signal entlang der geraden Linie übertragen wird, entlang derer die optische Achse liegt, und ein entsprechendes Bild auf Grundlage des reflektierten zweiten optischen Signals erzeugt wird, wobei, wenn sich der drehbare Reflektor (201) in der zweiten Position befindet, der erste reflektierende Bereich (2013) näher an der zweiten Fläche (2032) ist als der zweite reflektierende Bereich (2014), wobei ein Winkel zwischen der ersten Spiegelteilfläche und einer Übertragungsrichtung des reflektierten zweiten optischen Signals an der geraden Linie, entlang derer die optische Achse liegt, 135 ° beträgt und eine Übertragungsrichtung des zweiten optischen Signals senkrecht zu der zweiten Fläche (2032) ist, **dadurch gekennzeichnet, dass** der drehbare Reflektor (201) sequenziell in eine Vielzahl von drei oder mehr festgelegten Positionen gedreht werden kann, wobei der Bildsensor (204) konfiguriert ist, um eine Vielzahl von Bildern zu erzeugen, die der Vielzahl von festgelegten Positionen entsprechen, und um die Vielzahl von Bildern verschmelzen zu lassen, um ein Weitwinkelbild zu bilden, und
die erste Spiegelfläche (2011) eine konkave Fläche ist und die zweite Spiegelfläche (2012) eine konvexe Fläche; oder
die erste Spiegelfläche (2011) eine konvexe Fläche ist und die zweite Spiegelfläche (2012) eine konkave Fläche ist.

2. Kameramodul nach Anspruch 1, wobei das Kameramodul ferner einen Motor (205) umfasst und der Motor (205) konfiguriert ist, um den drehbaren Reflektor (201) anzutreiben, um sich zu drehen.

3. Kameramodul nach Anspruch 2, wobei der Motor (205) eine Antriebsschaltung (2052) und eine Motorwelle (2051) umfasst, wobei der drehbare Reflektor (201) an der Motorwelle (2051) angeordnet ist und die Antriebsschaltung (2052) konfiguriert ist, um die Motorwelle (2051) anzutreiben, um sich zu drehen, um den drehbaren Reflektor (201) anzutreiben, um sich zu drehen.

4. Kameramodul nach einem der Ansprüche 1 bis 3, wobei das Kameramodul ferner eine Motorgruppe (207) umfasst; und
die Linsengruppe (207) N Linsen umfasst, die sequenziell entlang der geraden Linie angeordnet sind, entlang derer die optische Achse liegt, wobei die Motorgruppe (207) N Motoren umfasst, wobei die N Motoren eins-zu-eins den N Linsen entsprechen und jeder Motor konfiguriert ist, um die entsprechende Linse anzutreiben, um sich entlang der geraden Linie zu bewegen, entlang derer die optische Achse liegt, um eine Brennweite der Linsengruppe (202) einzustellen, wobei N eine ganze Zahl größer oder gleich 1 ist.

5. Kameramodul nach einem der Ansprüche 1 bis 4, wobei sich eine Ebene, in der sich der Bildsensor (204) befindet, parallel zu der geraden Linie befindet, entlang derer die optische Achse liegt.

6. Kameramodul nach einem der Ansprüche 1 bis 5, wobei das Kameramodul ferner eine Schaltplatte (209) umfasst und sich der drehbare Reflektor (201), die Linsengruppe (202) und der Bildsensor (204) alle auf einer selben Fläche der Schaltplatte (209) befinden.

7. Kameramodul nach Anspruch 1, wobei der drehbare Reflektor (201) aus der ersten Position in die zweite Position gedreht wird.

8. Endgerätevorrichtung, umfassend das Kameramodul nach einem der Ansprüche 1 bis 6 und einen Speicher, wobei
das Kameramodul konfiguriert ist, um ein Bild zu fotografieren; und
der Speicher konfiguriert ist, um das Bild zu speichern.

## Revendications

1. Module d'appareil photo, dans lequel le module d'appareil photo comprend un réflecteur rotatif (201), un groupe de lentilles (202), un boîtier (203) et un capteur d'image (204) ;
le boîtier (203) comprend une première surface (2031) et une seconde surface (2032), dans lequel la première surface (2031) est opposée à la seconde surface (2032) ;
une première surface miroir (2011) du réflecteur rotatif (201) est une surface réfléchissante, le réflecteur rotatif (201) est divisé en une première zone réfléchissante (2013) et une seconde zone réfléchissante (2014) par un plan dans lequel se trouve un axe optique du groupe de lentilles (202), et une partie de la première surface miroir (2011) située dans la première zone réfléchissante (2013) est une première sous-surface miroir, dans lequel le réflecteur rotatif (201) comprend en outre une seconde surface miroir (2012) opposée à la première surface miroir (2011), et la seconde surface miroir (2012) est une surface réfléchissante ; et
quand le réflecteur rotatif (201) est situé au niveau d'une première position, la première surface miroir (2011) réfléchit un premier signal optique entrant à partir de la première surface (2031), le premier signal optique réfléchi est transmis suivant une ligne droite le long de laquelle se trouve l'axe optique, et une image correspondante est générée sur la base du premier signal optique réfléchi, dans lequel, quand le réflecteur rotatif (201) est situé au niveau de la première position, la première zone réfléchissante (2013) est plus proche de la première surface (2031) que la seconde zone réfléchissante (2014), un angle entre la première sous-surface miroir et une direction de transmission du premier signal optique réfléchi sur la ligne droite le long de laquelle se trouve l'axe optique est 135°, et une direction de transmission du premier signal optique est perpendiculaire à la première surface (2031) ; et
quand le réflecteur rotatif (201) est situé au niveau d'une deuxième position, la seconde surface miroir (2012) réfléchit un second signal optique entrant à partir de la seconde surface (2032), le second signal optique réfléchi est transmis suivant la ligne droite le long de laquelle se trouve l'axe optique, et une image correspondante est générée sur la base du second signal optique réfléchi, dans lequel, quand le réflecteur rotatif (201) est situé au niveau de la deuxième position, la première zone réfléchissante (2013) est plus proche de la seconde surface (2032) que la seconde zone réfléchissante (2014), un angle entre la première sous-surface miroir et une direction de transmission du second signal optique réfléchi sur la ligne droite le long de laquelle se trouve l'axe optique est 135°, et une direction de transmission du second signal optique est perpendiculaire à la seconde surface (2032), **caractérisé en ce que** le réflecteur rotatif (201) peut être tourné séquentiellement dans une pluralité d'au moins trois positions désignées, le capteur d'image (204) est configuré pour générer une pluralité d'images correspondant à la pluralité de positions désignées et pour fusionner la pluralité d'images pour former une image grand angle, et
la première surface miroir (2011) est une surface concave et la seconde surface miroir (2012) est une surface convexe ; ou
la première surface miroir (2011) est une surface convexe et la seconde surface miroir (2012) est une surface concave.

2. Module d'appareil photo selon la revendication 1, dans lequel le module d'appareil photo comprend en outre un moteur (205), et le moteur (205) est configuré pour entraîner le réflecteur rotatif (201) pour tourner.

3. Module d'appareil photo selon la revendication 2, dans lequel le moteur (205) comprend un circuit de commande (2052) et un arbre moteur (2051), le réflecteur rotatif (201) est disposé sur l'arbre moteur (2051) et le circuit de commande (2052) est configuré pour commander l'arbre moteur (2051) pour tourner, pour entraîner le réflecteur rotatif (201) pour tourner.

4. Module d'appareil photo selon l'une quelconque des revendications 1 à 3, dans lequel le module d'appareil photo comprend en outre un groupe de moteurs (207) ; et
le groupe de lentilles (207) comprend N lentilles agencées séquentiellement le long de la ligne droite le long de laquelle se trouve l'axe optique, le groupe de moteurs (207) comprend N moteurs, les N moteurs correspondent de manière biunivoque aux N lentilles, et chaque moteur est configuré pour entraîner la lentille correspondante pour se déplacer le long de la ligne droite le long de laquelle se trouve l'axe optique, pour ajuster une distance focale du groupe de lentilles (202), dans lequel N est un entier supérieur ou égal à 1.

5. Module d'appareil photo selon l'une quelconque des revendications 1 à 4, dans lequel un plan dans lequel est situé le capteur d'image (204) est parallèle à la ligne droite le long de laquelle se trouve l'axe optique.

6. Module d'appareil photo selon l'une quelconque des revendications 1 à 5, dans lequel le module d'appareil photo comprend en outre une carte de circuit (209), et le réflecteur rotatif (201), le groupe de lentilles (202) et le capteur d'image (204) sont tous situés sur une même surface de la carte de circuit (209).

7. Module d'appareil photo selon la revendication 1, dans lequel le réflecteur rotatif (201) est tourné de la première position à la deuxième position.

8. Dispositif terminal, comprenant le module d'appareil photo selon l'une quelconque des revendications 1 à 6 et une mémoire, dans lequel
le module d'appareil photo est configuré pour photographier une image ; et
la mémoire est configurée pour stocker l'image.
